Europäisches Patentamt

**European Patent Office**

**Office européen des brevets**

(19)

(11) Publication number: **0 073 582**
A1

# EUROPEAN PATENT APPLICATION

(12)

(21) Application number: **82304188.4**

(22) Date of filing: **09.08.82**

(51) Int. Cl.³: **F 16 C 1/28**

(30) Priority: **27.08.81 US 296915**

(43) Date of publication of application: **09.03.83**
**Bulletin 83/10**

(84) Designated Contracting States: **DE FR GB**

(71) Applicant: **CABLECRAFT INC., 4401 S. Orchard Street,
Tacoma, WA 98466 (US)**

(72) Inventor: **Hurlow, Robert H., 7812 Yeomalt Point Dr. N.E.,
Bainbridge Island Washington 98110 (US)**

(74) Representative: **Everitt, Christopher James Wilders et al,
F.J. CLEVELAND & COMPANY 40/43 Chancery Lane,
London WC2A 1JQ (GB)**

(54) **A push-pull coaxial cable.**

(57) A poush-pull actuator cable in which flexible multistrand metal sheath and core members (10 and 14) are maintained in substantially coaxial relationship in variously flexed positions and are guided for relative longitudinal movement by roller bearing means including a number of elongated roller bearing elements (18) maintained oriented transversely to the length of the cable and in successively spaced relationship along the length of the cable and that no two bearing elements (18) are diametrically opposed. Thus spaced, and with opposite end portions (18a) having roller surfaces contoured to roll on the sheath interior and an intermediate portion (18b) contoured to roll on the core member (14), the roller bearing elements (18) can be given zero or negative clearance between cable members (10 and 14) so as to provide an actuator with negligible backlash, low frictional restraint and high load bearing capability throughout a wide range of flexure.

-1-

## "A Push-Pull Coaxial Cable"

### Background of the Invention

This invention relates to push-pull cable actuators and is herein illustratively described by reference to the presently preferred embodiment thereof.

Actuators employing coaxial flexible cables for transmitting motion, force and position over any selected distance and path configuration have long been used in a variety of applications where transmission by mechanical linkages, gears, rotary shafts or other less versatile or flexible systems is not practical or possible. The technology involved in the coaxial push-pull actuator has advanced considerably in recent years and has been the subject of numerous prior proposals. Examples include those disclosed in Bratz, U.S. Patent No. 3,344,682; Hurlow, U.S. Patent No. 3,990,321 and Richoux, U.S. Patent No. 2,841,029.

An object of this invention is to provide a universally flexible push-pull cable adaptable by choice of design parameters for transmitting light or heavy loads and exhibiting little or no backlash or slack motion effect.

Another object hereof is to provide such a cable of durable, wear-resistant qualities, and which fulfills the following further objectives: 1) substantially noncritical dimensional tolerance requirements; 2) smooth motion-transmitting capability relatively free of cogging and/or ratcheting effects (i.e., fluctuations in frictional drag between core and sheath members during the push strokes and pull strokes of the device); and, 3) simplicity of assemblage with a minimum number of different types or kinds of parts required.

### Summary of the Invention

The foregoing and related objectives are achieved by this invention utilizing a plurality of elongated roller bearing elements generally similar in configuration to those shown and described in Bratz (3,344,682) with end portions convexly shaped to roll against the cable sheath interior wall and an intermediate portion concavely shaped to roll against the coaxial cable core member. Inner and outer members are metallic and of multistrand construction permitting cable flexure in any plane.

Positioned and oriented within the elongated annular space between inner and outer cable members by an elongated tubular retainer means, the bearing rollers are preferably distributed in helical series relationship such that no two bearing rollers are diametrically opposed to each other. The inner and outer cable members and the roller bearing elements then are dimensioned preferably for slight negative clearance of the roller bearing elements between the cable members. Such negative clearance achieves the objective of eliminating substantially all backlash effects without appreciable reduction in load transmission capacity of the cable in various states of flexure and without materially increasing operating friction.

These and other features, objects and advantages of the invention will become more fully evident from the description that follows with reference to the accompanying drawings.

### Brief Description of the Drawings

FIGURE 1 is a side view taken partly in section illustrating a length of push-pull cable embodying the principles of the invention.

FIGURE 2 is a transverse sectional view taken on line 2--2 in FIGURE 1.

FIGURE 3 is a perspective view illustrating the configuration of one form of roller bearing retainer or keeper with rollers prepositioned in retainer slots or apertures therein for insertion into the annular space between inner and outer cable members.

End fittings for the push-pull cable illustrated are omitted from the illustration inasmuch as they are or may be conventional.

## Detailed Description

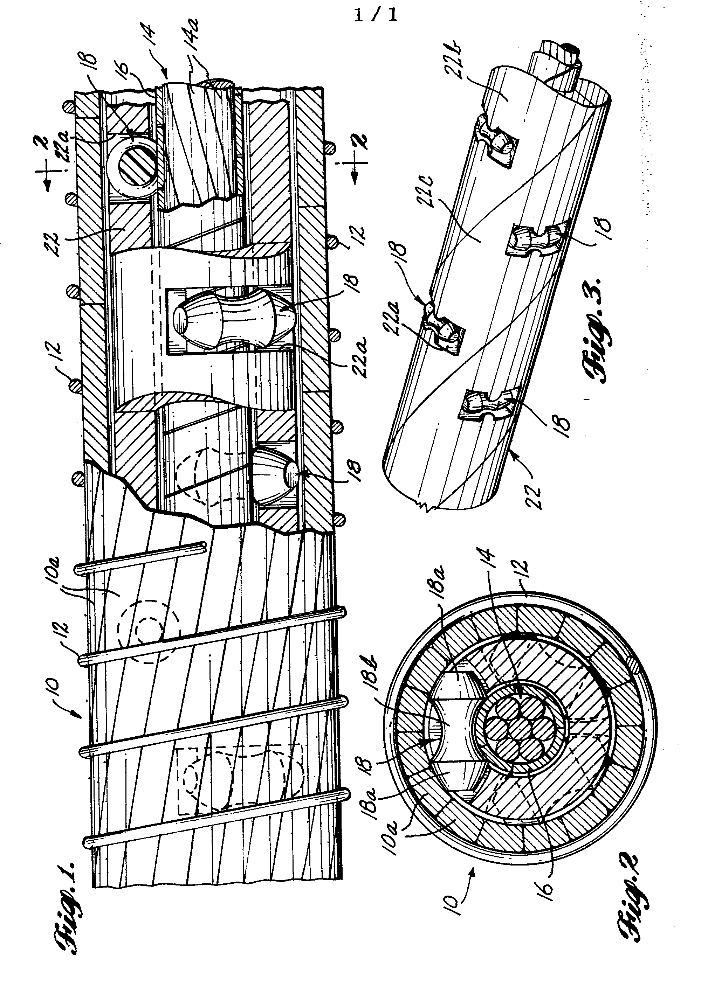

As depicted in the drawings, the invention is illustrated in a push-pull cable having a multistrand outer member or sheath 10 that may be produced in accordance with the teachings of co-pending US application, Serial No. 234,760, filed February 17, 1981 and UK Patent Application No. 8138749, filed December 23, 1981 (Serial No. 2093082A, publication date August 25, 1982). In that configuration, the sheath is made up of a group of round wires 10a squared and curved by swaging into a circular series enwrapped by a retainer wire 12. The sheath-forming component wires 10a are given a slow spiral twist lengthwise of the sheat 10 as depicted in FIGURE 1. The pitch of the spiral is sufficiently large that the roller bearing members to be described pass smoothly from wire to wire as they roll lengthwise along the sheath with minimal cogging or ratcheting effect. Such a sheath is flexible and has other advantages as described in said US and UK patent applications.

The flexible inner or core member 14 of the coaxial cable comprises a bundle of individual wires 14a wrapped by a metal band 16 having a slow pitch and presenting a metal face against which the roller bearings to be described run in rolling contact when the cable is actuated. The pitch of the enwrapment band or bands 16, again, is sufficiently slow as to avoid cogging or ratcheting effects as the rollers roll on them lengthwise of the cable.

In the preferred embodiments of the invention, the inside diameter of the cable outer member 10 is not more than approximately three times the outside diameter core member 14, such that the roller bearing elements 18 interposed between them function with minimum scouring effect on the surfaces they engage. Each such roller bearing element 18 comprises enlarged opposite end portions 18a of similar configuration and an intermediate portion 18b, the composite being vaguely reminiscent of an exercise dumbbell used by gymnasts and weight lifters. The end portions 18a have longitudinally convex surfaces shaped substantially to the transverse contour of the inside wall surface of the cable outer member 10 and of a length measured along the central rotational axis of the roller bearing element 18 approximating 1/4 the total length of the element. The intermediate portion 18b has a longitudinally concave annular surface conformed substantially to the exterior cylindrical surface of the cable member 14. Thus, when the inner member and outer member are moved relatively lengthwise in actuation of the cable, the intermediate portion 18b rolls smoothly lengthwise against and lengthwise of the inner member 14, whereas the end portions 18a roll smoothly against and lengthwise of the outer or sheath member 10. It should be noted that even in the preferred embodiment there is bound to be some scouring or sliding of surfaces attending rotation of the bearing elements. This is due to the fact that the turning radius of the bearing element surfaces at different points along the length thereof differs. However, these differences, and the resultant scouring effect, can be minimized by dimensional design considerations so as to provide long cable life and the other advantages indicated.

A tubular retainer 22 positions and orients the roller bearing elements 18 at desired locations along the length of and about the circumference of the cable inner member. The retainer, which may be of any suitable material that accommodates flexure of the cable, may, for example, comprise a plastic material or metal. It incorporates a succession of arcuate slots 22a therein so formed, located and oriented that when the retainer member 22 and the roller bearing elements 18 are assembled, the roller bearing elements occupy

-4-

successive positions preferably extending in series along a helical path progressing lengthwise of the cable. The rollers are individually oriented with their rotational axes disposed in planes perpendicular to the longitudinal central axis of the retainer and thereby of the cable when the retainer is inserted in the annular space between the inner and outer cable members 14 and 10, respectively, (FIGURE 1). Because of the action of the bearing rollers, even with negative clearance designed into the cable as aforesaid, insertion of the bearing assembly requires very little force.

In FIGURE 3, the tubular retainer is shown formed by a double-pitch helical lay-up of elongated plastic strips 22b and 22c, together forming a continuous tube, with each such strip having its series of slots shaped to retain the roller bearing elements therein. It will be appreciated that the retainer may be made in other ways as well, including, without limitation, single or multiple pitch strip lay-ups and an integral one-piece extrusion or molding. Preferably, the slots are formed so as to hold the roller bearing elements therein as an inventoried subassembly ready for assembly with inventoried lengths of inner and outer cable members 14 and 10, respectively. This greatly facilitates and simplifies manufacture of the composite cable, making it possible with an inventory of but three basic components which can be severed into coextensive lengths either preliminary to assembly or as a step in or after a continuous production run of cable.

It will be noted, once again, that by arranging the roller bearing elements so that they do not lie opposite each other in any position along the length of the push-pull cable, transverse dimensional tolerances are not critical and it is not necessary to provide positive clearance in order to prevent binding. In fact, it is desirable and possible with the present invention to utilize negative clearance to advantage as previously described.

At the same time, the roller bearing elements provide free rolling of the rollers during relative longitudinal motion of the cable members and do not interfere with assembly nor with flexure of the cable when bending is imposed in any plane. Forces are transmitted, as are motions, in both push and pull relative directions, and smooth action is achieved with parts having long-wearing capabilities, particularly with the cable lubricated so as to minimize frictional scouring of the rollers on the cable surfaces during cable actuation. The metal of the roller bearing elements may be chosen to suit particular design requirements as may be the metal in the component parts of the inner and outer cable members. The end fittings, not shown, are or may be conventional as in any push-pull control cable.

-5-

These and other aspects of the invention will be evident to those skilled in the art based upon an understanding of the foregoing disclosure of the presently preferred form and embodiment thereof.

## CLAIMS

1.   A push-pull coaxial cable comprising elongated flexible outer and inner cable members coextending in substantially coaxial relationship and of respective inner and outer surface diameters differing to provide an elongated annular space between them, and roller bearing means interposed between and supportively guiding said cable members relatively for longitudinal movement between them, said roller bearing means comprising a plurality of elongated roller bearing elements and elongated tubular retainer means extending substantially through said annular space maintaining said elements with their respective rotational axes oriented transverse to the length of the cable and positioning said elements with successive spacings distributed along and circumferentially about the core member with no roller bearing element diametrically opposed to any other roller bearing element, said roller bearing elements each having enlarged opposite end portions with longitudinally convex bearing surfaces substantially conformed to and rolling upon the outer cable member interior surface and an intermediate portion with a longitudinally concave bearing surface conformed to and rolling upon the exterior of the inner cable member.

2.   The push-pull cable defined in Claim 1 wherein the inner and outer cable members comprise flexible metal strand assemblies engaged by the roller bearing elements, also metal.

3.   The push-pull cable defined in Claim 2 wherein the roller bearing elements are distributed in a generally helical pattern extending substantially throughout the length of said cable.

4.   The push-pull cable defined in any of Claims 1, 2 or 3 wherein the elongated tubular retainer means comprises at least one elongated strip relatively thin in relation to width spiraled in the tubular configuration of the retainer means and having apertures therein retaining the respective roller bearing elements rotationally in predetermined relative orientation within such apertures.

5.   The push-pull cable defined in any of Claims 1, 2 or 3 wherein the elongated tubular retainer means has apertures therein retaining the respective roller bearing elements rotationally in predetermined relative orientation within such apertures preparatory to insertion of the retainer means into the cable space.

6.   The push-pull cable defined in any of Claims 1, 2 or 3 wherein the diameters of the roller bearing element end portions and intermediate portion are sufficient for negative clearance thereof between inner and outer cable members.

Fig.1.

Fig.2

Fig.3.

1/1

0073582

European Patent
Office

**EUROPEAN SEARCH REPORT**

Application number

EP 82 30 4188.4

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| A | DE - B - 1 139 334 (STE D'ELECTRICITE MORS) <br> * claim; fig. 1, 2 * | 1,3,4 | F 16 C 1/28 |
| A | FR - A - 871 065 (R. RICHOUX) <br> * page 2, line 103 to page 3, line 44; fig. 1 to 6 * | 1,3-5 | |
| A | GB - A - 1 276 384 (TELEFLEX INC.) <br> * claims 1, 3, 5, 6; fig. 1 to 4 * | 1,3-5 | |
| A | US - A - 1 930 272 (L.C. HUCK) <br> * fig. 9 to 11 * | 1,3,4 | TECHNICAL FIELDS SEARCHED (Int.Cl.3) <br><br> F 16 C 1/00 |
| D,A | US - A - 3 344 682 (O.J. BRATZ) <br> * claim 1; fig. 1 to 3 * | 1,2,5 | |
| D,A | US - A - 2 841 029 (R. RICHOUX) | | |
| D,A | US - A - 3 990 321 (R.H. HURLOW) | | |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 01-11-1982 | MASSALSKI |

EPO Form 1503.1  08.78